# EUROPEAN PATENT SPECIFICATION

(11) **EP 1 921 867 B1**
(45) Date of publication and mention of the grant of the patent: **25.05.2016**
(21) Application number: 06021719.7
(22) Date of filing: 17.10.2006
(51) Int. Cl.: H04N 19/527, H04N 19/61, H04N 19/137

(54) **Sensor assisted video compression**
Sensorunterstützte Videokompression
Compression vidéo assistée par detecteurs

(43) Date of publication of application: 14.05.2008
(73) Proprietor: Harman Becker Automotive Systems GmbH, 76307 Karlsbad (DE)
(72) Inventor: Stephan, Martin, 76337 Waldbronn (DE); Mohr, Ulrich, 76131 Karlsruhe (DE)
(74) Representative: Grünecker Patent- und Rechtsanwälte PartG mbB

(56) References cited:
- JP-A- 2004 056 578
- JP-A- 2005 323 021

## Description

The present invention relates to video data compression, and in particular to a digital video system for automotive vehicles and a corresponding method.

### BACKGROUND OF THE INVENTION

Digital video information is becoming more and more ubiquitous in automotive vehicles as a growing number of advanced driver assistance systems, video acquisition, monitoring, and passenger entertainment systems are integrated. State-of-the-art automotive network communications protocols provide high transmission bandwidth paired with fault-tolerance and real-time performance. Bulky wiring harnesses connecting various electronic control units and actuators of a vehicle have been replaced by digital bus lines such as Controller Area Network (CAN) or FlexRay. Multimedia applications, on the other hand, communicate via dedicated bus systems based on Media Oriented Systems Transport (MOST) or FireWire (IEEE1394) networking standards.

In order to reduce the amount of bandwidth and storage capacity required for transmitting and storing of video data, conventional video data compression techniques may be employed. These techniques exploit spatial (similarities between neighboring pixels) and temporal (similarities between consecutive frames) redundancies to reduce the amount of information that has to be encoded as well as statistical coding schemes to convert the remaining information into a highly compressed stream of data. Prominent examples for state-of-the-art video compression standards are MPEG-2 and H.264/AVC.

A conventional method for video data compression predicts a current frame of video data from previously encoded video data and encodes only the difference between the current frame and its prediction.

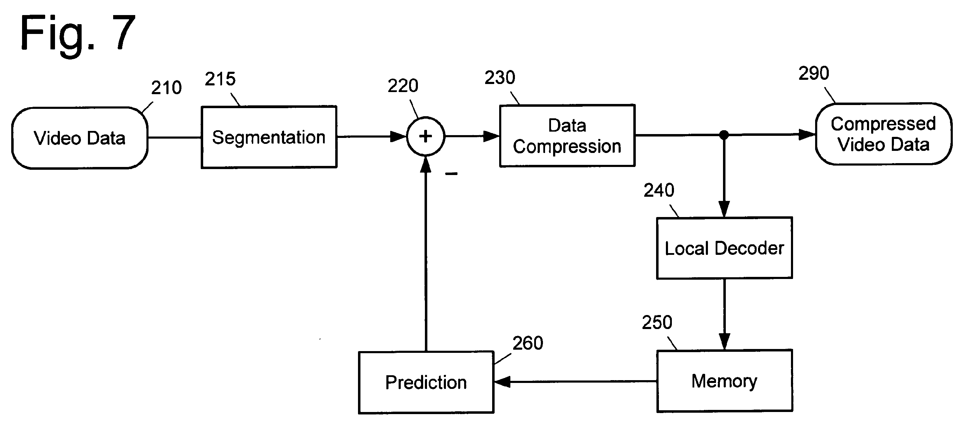

Figure 7 is a block diagram of a conventional video encoder. Usually, video data is encoded on a block-by-block basis. To this end, a segmentation unit 215 divides each video image into a plurality of blocks, each of which is then encoded separately. A subtractor 220 is used to subtract predicted video blocks from input video data 210. The difference, which represents the prediction error, is encoded by a data compression unit 230, which may apply an orthogonal transformation such as a discrete cosine transformation, quantize the resulting transform coefficients, and employ a statistical coding scheme so as to generate compressed video data 290. Predicted video blocks are generated by a prediction unit 260. Prediction is based on previously encoded video data provided by a local decoder 240, which is basically reversing the operation of the data compression unit 230 and the subtractor 220, and stored by a (frame) memory 250.

The prediction may simply be based on the previous frame so as to encode changed pixel values only. More sophisticated compression methods maintain a "model" of the video image content so as to generate a more faithful prediction of each frame. Obviously, any improvement of coding efficiency can only be achieved at a substantial computational cost.

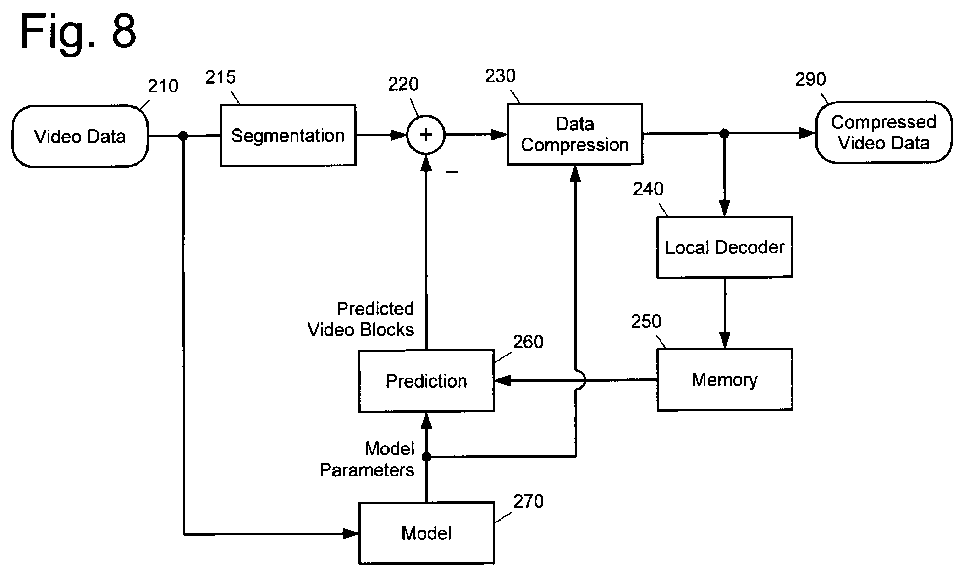

Figure 8 shows an example configuration of a model-based video encoder. This encoder differs from the encoder of Fig. 7 in that a model unit 270 is maintaining a model of the input data, which is employed by the prediction unit 260 to generate an improved prediction of the input video data 210. In most cases, the model of the input data is not static but its parameters will have to be updated constantly by the model unit 270 in accordance with current input video data 210. In order to decode the compressed video data 290, the prediction must be reproducible by the decoder. Therefore, model parameters passed to the prediction unit 260 also have to be fed to the data compression unit 230 in order to be included into the compressed video data 290. Any other operation of the model-based video encoder of Fig. 8 is similar to the encoder of Fig. 7, in which like functional units are denoted by like reference numbers, a detailed description of which is thus omitted.

Motion estimation and compensation is an example for a model based video compression method. This method divides each video image into a plurality of blocks. For each block, motion vectors are determined that indicate the apparent motion of the corresponding part of the image. The current frame is then predicted based on a previous frame and the determined motion vectors. As compared to Fig. 8, the model parameters thus consist of the determined motion vectors and the model unit 270 represents a motion estimation unit.

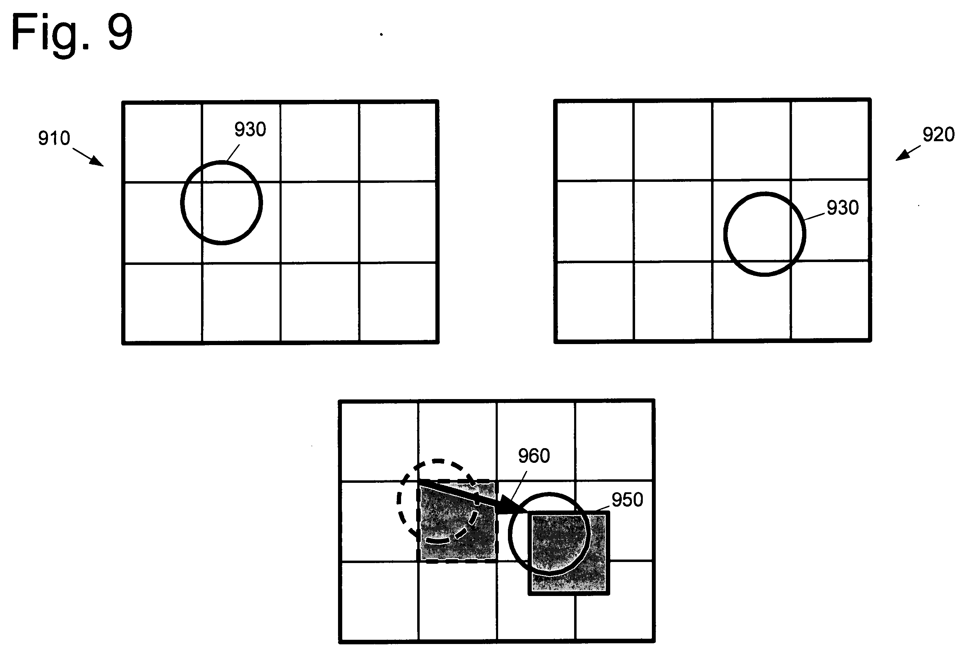

The step of determining motion vectors is illustrated in Fig. 9. An object 930 in a current video image 920 has moved relative to a previous video image 910. In order to determine the corresponding motion vector, a block 950 of the previous video image is shifted and compared to the content of the current video image. The shifted position that yields the best match with the current video image is then used to define a motion vector 960 for this block.

The determination of motion vectors is computationally very expensive, since a lot of pixel difference values have to be computed in the comparing step. This translates into either costly hardware or slow non-realtime processing.

### SUMMARY OF THE INVENTION

The aim of the present invention is to provide a system for video compression in a vehicle and a corresponding method wherein motion vectors are determined more efficiently.

This is achieved by the features as set forth in the independent claims. Preferred embodiments are the subject matter of dependent claims.

It is the particular approach of the present invention to exploit sensory information on the current state of motion of the vehicle to which the video camera is mounted to estimate the optical flow within the camera's visual field so that motion vectors required for video data compression can be determined more efficiently.

According to a first aspect of the present invention, a digital video system for vehicles, in particular for automotive vehicles, is provided. The digital video system comprises a video camera mounted to the vehicle, at least one sensor that is providing vehicle motion information indicating a current state of motion of the vehicle, an optical flow estimation unit for estimating an apparent motion of objects within the visual field of the video camera in accordance with the vehicle motion information, and a video encoder that is adapted for compressing video data delivered by the video camera in accordance with the estimated apparent motion.

According to another aspect of the present invention, a video compression method for vehicles, in particular automotive vehicles, equipped with a video camera mounted to the vehicle and at least one sensor that is providing vehicle motion information indicating a current state of motion of the vehicle, is provided. The method comprises the steps of estimating an apparent motion of objects within the visual field of the video camera in accordance with the vehicle motion information and compressing video data delivered by the video camera in accordance with the estimated apparent motion.

Preferably, the optical flow estimation unit further comprises a motion reconstruction means for reconstructing the vehicle's current state of motion from vehicle motion information provided by the at least one sensor. In this manner, the apparent motion of objects within the visual field of the video camera can be determined in accordance with the reconstructed current state of motion of the vehicle by simple geometrical computations.

The optical flow estimation unit may provide information on the estimated apparent motion in form of qualitative information indicating a type of flow field, such as a zoom-in or zoom-out type of field, or a simple left/right movement. This information can readily be taken into account by the video encoder in order to speed up the compressing process.

Alternatively, the optical flow estimation unit may provide information on the estimated apparent motion in form of a vector field representation. In this manner, the apparent motion of objects can be described quantitatively depending on the location of the object within the visual field of the camera. Therefore, the optimum starting value or search range for determining motion vectors can be set, even if the apparent motion of objects in one part of the visual field is different from objects in another part.

Preferably, the video encoder comprises a motion estimation unit that is adapted for determining motion vectors indicating motion within subsequent video images, said motion vectors being determined in accordance with the estimated apparent motion of objects within the visual field of the camera, and a predictive coding unit that is adapted for coding a difference between the video data and video images that are predicted from the determined motion vectors. In this manner, video data delivered by the camera can be compressed based on a motion estimation and compensation scheme, while the computational effort for determining the motion vectors is significantly reduced.

Preferably, the motion estimation unit is determining the motion vectors by searching a predefined search range of possible motion vectors. This allows for an adaptive setting of the search range depending on encoding requirements and available additional information, e.g., provided by sensors, so that the efficiency of the motion estimation algorithm can be improved.

Preferably, the motion estimation unit is setting the search range or the starting values for searching the motion vectors in accordance with the estimated apparent motion. In this manner, the correct motion vectors can be found much more quickly as compared to the conventional method wherein the entire video image has to be searched. Moreover, the precision of the resulting motion vectors can be improved by guaranteeing that an iterative algorithm converges to the motion vectors that provide the best description of the actual motion.

Preferably, the video encoder further comprises a blocking device that is partitioning a video image into blocks, and wherein the motion estimation unit is determining motion vectors for each of said blocks in accordance with the estimated apparent motion and a location of the block within the video image. In this manner, the input video data can be encoded per block in accordance to a conventional video compression standard. Moreover, different apparent motion of objects in different parts of the video image can be taken into account, for instance, in accordance with a vector field representation of the optical flow. In this manner, the best starting value for determining motion vectors can be chosen by selecting for each block of the video image the appropriate vector of the vector field as a basis for determining the motion vector of this block.

Preferably, the video encoder is compressing the video data in accordance with any of the standards recommended by the Motion Picture Experts Group (MPEG). Particular examples for coding standards are MPEG-2 and H.264/AVC (MPEG-4). This allows, for instance, compatibility with existing decoder and/or recorder hardware.

Preferably, the at least one sensor is either one of a tachometer, an accelerometer, an angular sensor of the steering wheel, a distance sensor, a gyroscope, a compass, and a GPS receiver. Information provided by these sensors allows for an accurate reconstruction of the vehicle's current state of motion and, hence, for an accurate estimation of the apparent motion of objects within the camera's visual field. Moreover, these sensors may be present in conventional vehicles anyway so that the corresponding information is readily available within the vehicle's digital communication systems.

Preferably, the vehicle motion information comprises at least one of velocity, direction of motion, linear acceleration, and radial acceleration. In this manner, the optical flow can easily be computed.

Preferably, the digital video system further comprises a digital communications bus line for connecting the at least one sensor and the video encoder. The connection may also be mediated by a gateway connecting two different bus systems, such as control bus (CAN/FlexRay) and a multimedia bus (Media Oriented Systems Transport, MOST). In this manner, the sensor information can be delivered to the video encoder without the need of bulky wiring harnesses. The system may also take advantage of existing communications bus infrastructure.

Preferably, the digital video system further comprises a displaying device and/or a recording device connected to the video encoder via the digital communications bus line for decoding and displaying and/or recording the video data. By these means, acquired video images may be recorded and displayed immediately. Moreover, prerecorded video data may be reproduced and distributed to one or more remote display devices, for instance, for entertainment purposes.

The above and other objects and features of the present invention will become more apparent from the following description and preferred embodiments given in conjunction with the accompanying drawings, in which:
- Fig. 1: is a block diagram showing the configuration of a video system in accordance with an embodiment of the present invention;
- Fig. 2: is a block diagram showing the configuration of a video encoder in accordance with an embodiment of the present invention;
- Fig. 3A: is a drawing illustrating apparent motion within a video image;
- Fig. 3B: is a drawing illustrating apparent motion within a video image;
- Fig. 4A: is a drawing illustrating an optical flow field caused by proper motion of the camera;
- Fig. 4B: is a drawing illustrating an optical flow field caused by proper motion of the camera;
- Fig. 5: is a diagram illustrating a method for motion estimation according to an embodiment of the present invention;
- Fig. 6: is a flow chart illustrating a method for sensor assisted video compression in accordance with an embodiment of the present invention;
- Fig. 7: is a block diagram showing the configuration of a conventional video encoder;
- Fig. 8: is a block diagram showing the configuration of a conventional video encoder with model-based prediction;
- Fig. 9: is a diagram illustrating a conventional method for motion estimation.

### DETAILED DESCRIPTION

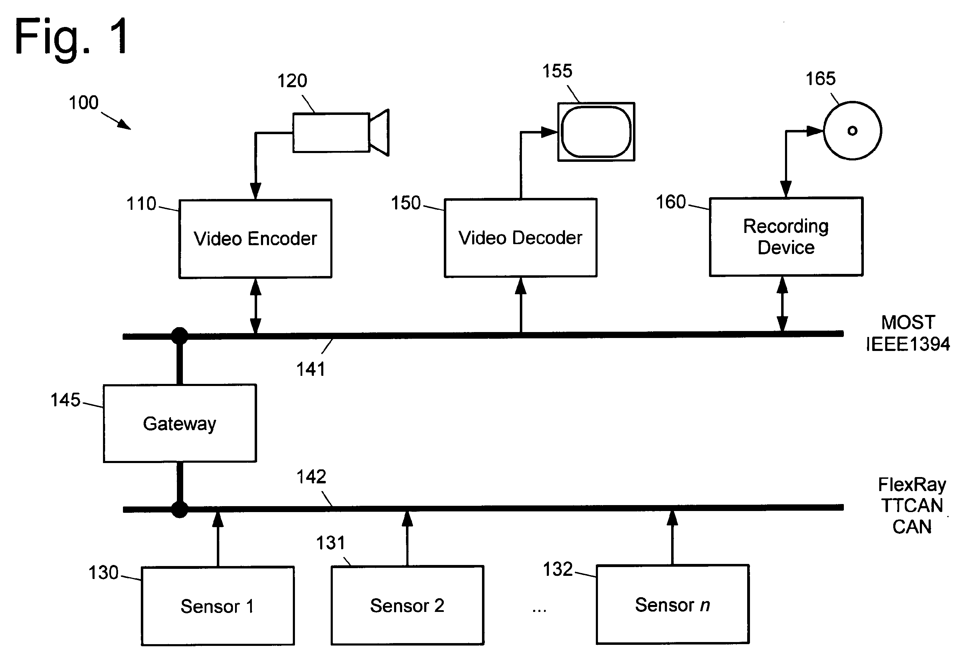

Figure 1 illustrates an exemplary embodiment of a video system 100 in accordance with the present invention. In a vehicle, a digital bus line 142, such as a Controller Area Network (CAN) bus or a FlexRay bus, is used to connect various electronic control units, actuators (not shown), sensors 130-132, and the like. Multimedia components such as video encoder 110, video decoder 150, and/or storage devices 160 for recording/reproducing video data to/from a recording medium 165, on the other hand, communicate by a dedicated multimedia bus 141 according to the MOST (Media Oriented Systems Transport) or FireWire (IEEE1394) networking standard. Information may be exchanged between these two subsystems via a gateway 145 that interconnects the control bus 142 and the multimedia bus 141. A video camera 120, which is directly connected to the video encoder 110, is mounted to the vehicle so as to provide images, for instance, from the area ahead or behind of the vehicle. The system may further be equipped with a display unit 155 connected to the video decoder 155.

The video encoder 110 receives a video signal from the camera, compresses the video signal, and outputs compressed video data to the multimedia bus 141. The video encoder also receives information provided by the various sensors 130-132 via the control bus 142 and the gateway 145. The video encoder may, for instance, reconstruct the vehicle's current state of motion from the received sensor information and exploit this information in order to speed up the determination of motion vectors required for video data compression.

The video decoder 150 receives compressed video data, for instance, from the video encoder 110 or the storage device 160 via the multimedia bus 141, decodes the compressed video data, and feeds the corresponding video signal to a display unit 155.

The storage device 160 receives compressed video data from the video encoder 110 via the multimedia bus 141 and records the received data to a recording medium 165, such as magnetic tape, hard disk or optical disc. The storage device 160 may also be used to reproduce video data from the recording medium, output the reproduced video data to the communications bus in order to send it to the video decoder 150 for displaying purposes.

The video system 100 according to the present invention allows for a large scope of applications. For example, video information picked up by a camera mounted in the rear of the vehicle may be transmitted to a display mounted on the dashboard so as to assist the driver in backing into a parking space. Video information picked up by a camera mounted in the front of the vehicle may be sent to the storage device in order to be recorded for later analysis or prosecution. The recorded video data may also be reproduced and sent to the video decoder for immediate playback on the display 155. Finally, pre-recorded video data, such as movies from commercially available DVDs, may be reproduced and transmitted via multimedia bus 141 to one or more video decoder/display units 150, 155 arranged for passenger entertainment.

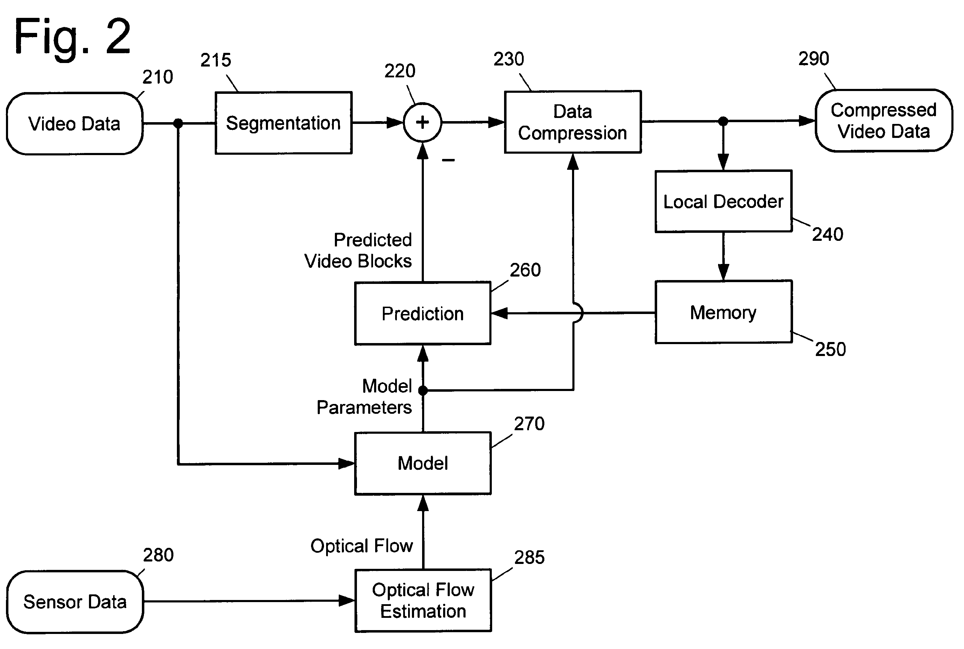

Figure 2 is a block diagram of a video encoder according to an embodiment of the present invention. Video data 210 is usually divided into a plurality of blocks by segmentation unit 215. Each block is then fed to a subtractor 220 in order to subtract predicted video images generated by prediction unit 260. The output of the subtractor, which corresponds to a prediction error, is then fed to data compression unit 230. The data compression unit 230 may apply conventional data compression methods including orthogonal transformation, quantization, and variable-length coding in order to generate compressed video data 290. The prediction unit is predicting a current video block based on previously encoded video blocks stored in memory unit 250 and an internal model of the image content provided by model unit 270. The local decoder 240 is basically reversing operations performed by the data compression unit and the subtractor so as to provide a reference copy of the image as it will be reconstructed by the decoder later on. The model unit is keeping the model constantly up-to-date by comparing the model to the input video data 210 and by applying optical flow information from an optical flow estimation unit 285. The optical flow estimation unit 285 is reconstructing the vehicle's current state of motion from information 280 provided by the sensors 130-132. Based on the current state of motion and known camera parameters, the optical flow estimation unit 285 is estimating the optical flow, which is then fed to the model unit 270. Any parameters characterizing the current state of the model used for predicting video frames are also fed to the data compression unit 230 in order to be included into the compressed video data 290.

According to an embodiment of the present invention, the model and prediction units may employ a motion estimation/compensation technique in order to reduce temporal correlations between consecutive video images. To this end, each video image is divided into a plurality of blocks, motion vectors indicating the apparent motion of objects within each block are determined, and video frames are predicted in accordance with the determined motion vectors. In this case, the model parameters comprise the entire set of motion vectors.

However, the present invention is not restricted to video encoders based on motion estimation/compensation. Instead, other models for predicting video images may be employed including models based on pattern recognition wherein objects such as other vehicles, road markings, traffic signs, etc., are recognized and tracked.

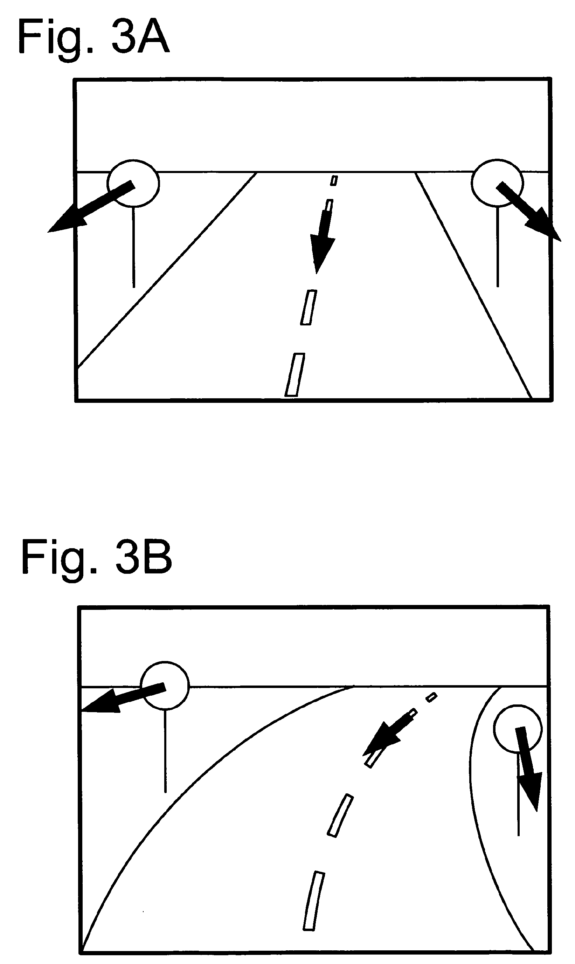

Figure 3A illustrates video images obtained by a video camera mounted to a vehicle. The video camera is directed to the area ahead of the vehicle so that objects in the left part of the image move towards the lower left of the image, objects in the right part move towards the lower right; cf. the arrows in Fig. 3A.

Figure 3B illustrates video images obtained by the same camera as in Fig. 3A while the vehicle is following a right hand bend. In this case, the apparent motion of objects in the video images is different than when the vehicle is going straight ahead.

More generally, the apparent motion of objects in the video images depends - apart from their proper motion or distance - on the vehicle's current state of motion, and in particular on speed and driving direction of the vehicle. Other parameters, such as focal length and viewing direction of the camera also have to be taken into account for estimating the object's apparent motion. These parameters, however, are usually fixed and considered to be known beforehand.

Hence, if the vehicle's current state of motion and the relevant camera parameters are known, conclusions regarding the apparent motion of objects within the camera's visual field can be drawn. It is the particular approach of the present invention to exploit information on the vehicles current state of motion in order to speed up the determination of model parameters such as motion vectors required for video data compression.

Information on the vehicle's current state of motion may be provided by a plurality of sensors that are either part of any conventional vehicle, such as tachometer and angle sensor attached to the steering wheel, etc., or additional sensors, such as accelerometers, gyroscopes, GPS receivers, etc.

From information provided by at least one of these sensors, the current state of motion of the vehicle can be reconstructed in terms of velocity, driving direction, linear and radial acceleration. In cases where available sensor information does not allow a full reconstruction of the current state of motion, the most important parameters such as velocity and driving direction may be derived while remaining parameters are replaced by default values, e.g. zero acceleration.

Based on the thus determined current state of motion of the vehicle, the optical flow within the camera's visual field can be estimated by using simple geometrical considerations and a few assumptions regarding distance and/or proper motion of objects within the camera's visual field. Depending on the camera's frame rate the actual displacement per frame of objects within the visual field can be estimated. This information may be employed to speed up the video compression as explained below in greater detail.

For example, if the vehicle is backing into a parking place with a velocity of 1 m/s, any stationary object within sight of the camera will also move at *v* = 1 m/s. For a given sample rate of camera, e.g., *f* = 25 images per second, the object's displacement s for two consecutive video images can be computed, viz. s = *v* / *f* = 40mm. Given the camera's viewing direction and focal length, the optical flow and thus the apparent motion of objects within the video images can be derived.

If information on the current state of motion is incomplete, a quantitative computation of the optical flow field may not be possible. However, even limited information on the current state of motion can be employed to derive valuable conclusions regarding the expected apparent motion of objects within the visual field of the camera.

For instance, if an angular sensor of the steering wheel indicates a right-hand bend, it can be concluded that objects recorded by a camera looking in the driving direction will appear to move to the left and vice versa. If a sensor attached to the gear shift indicates that the vehicle is going backwards, it can be concluded that objects recorded by a parking assistant camera attached at the rear of the car will approach the camera and thus appear to move towards the edge of the image (zoom in); otherwise they would appear to move towards the center of the image (zoom out). Any such form of qualitative information on the optical flow field may equally well be employed to speed up video compression as explained below in greater detail.

The reconstruction of the optical flow may also be assisted by sensor information that is only indirectly related to the vehicle's state of motion. Distance sensors based on ultrasonics or radar, for instance, can be used measure the vehicle's velocity, e.g. when backing into a parking space. They can also be used to measure relative velocities, e.g. of oncoming vehicles. This information together with the original distance information may be employed to provide a more accurate estimate of the optical flow field by substantiating the underlying assumptions on distance and proper motion of objects within the camera's visual field.

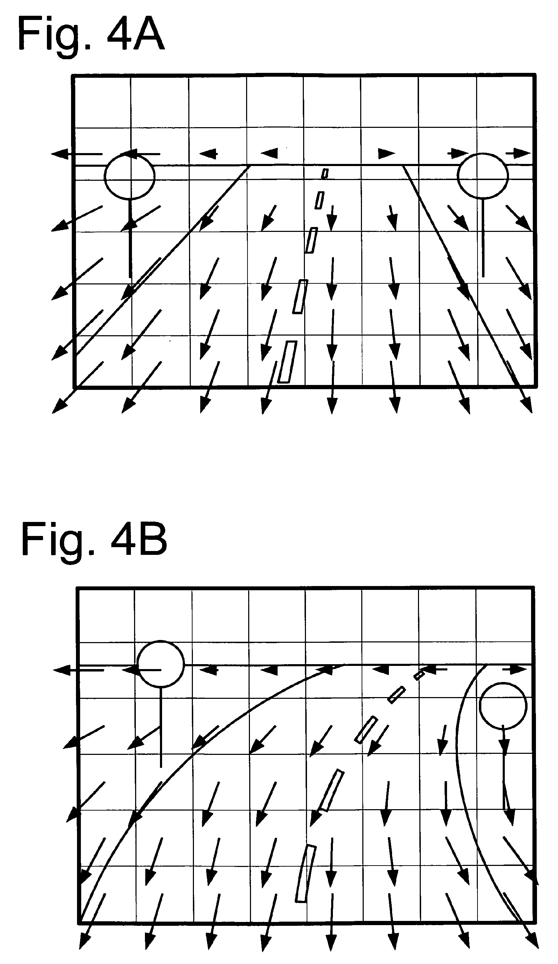

According to an embodiment of the present invention, video images are divided into a plurality of blocks. For each block, a vector that describes the block's apparent motion is determined in accordance with the vehicle's current state of motion. The entirety of these vectors form a representation of the optical flow field generated by the motion of the camera. Examples of such optical flow fields are illustrated in Figs. 4A and 4B for straight and right hand bend motion, respectively.

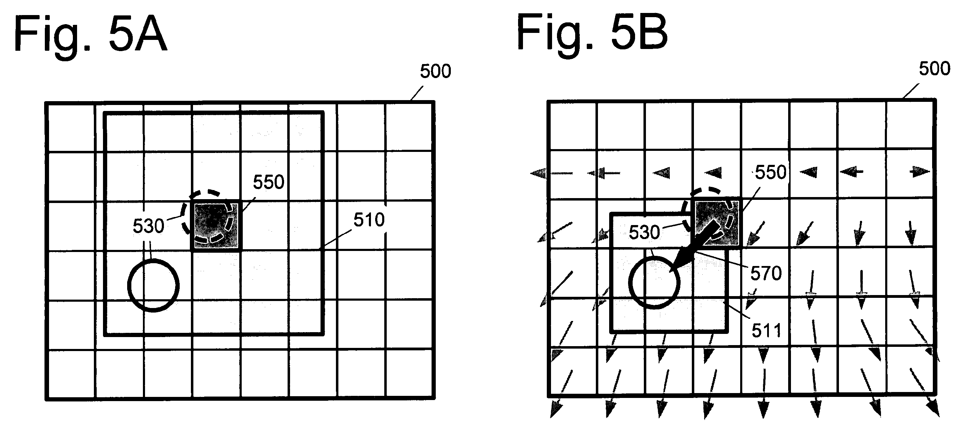

Figure 5 illustrates the difference between a conventional method for determining motion vectors and a method according to an embodiment of the present invention. As illustrated in Fig. 5A, motion vectors are determined conventionally by defining a search range 510 centered around the current block 550 of a previous video image for searching the block translation that yields the best match with the current video image. Since no a-priori information is available on the apparent motion of image objects 530, the search range has to be sufficiently large so as to cover all possible movements of the object. Therefore, a large number of candidate translations have to be evaluated and an even larger number of pixel difference values has to be computed.

According to the present invention, the current state of motion of the camera can be derived from sensor information 280 so that the optical flow field can be estimated by the optical flow estimation unit 285. Based on the estimated optical flow vector 570 of a block, the actual apparent motion of image objects within this block can be estimated. As it is illustrated in Fig. 5B, a search range 511 can thus be defined in accordance with the estimated apparent motion 570. Since the actual apparent motion of the image object 530 can be expected to deviate only marginally from this estimate, the search range may be centered around the estimate 570 and, most importantly, may be substantially smaller than in the conventional method. Therefore, only a small number of candidate translations have to be evaluated and a correspondingly small number of pixel difference values has to be computed. This translates directly into increased performance of the encoder, which may thus be built from cheaper hardware components.

Even if only limited qualitative information on the estimated optical flow field is available, the search range 511 may be set accordingly in order to achieve a similar advantage in terms of computational efficiency. For instance, if objects are known to move to the left-hand side because the car is taking a right-hand bend, the conventional search range 510 may be split into a left half and a right half so as to search the left half only. The same advantage can be realized if it is known that the optical flow is a zoom-in or a zoom-out type of flow field depending, for instance, on information on the driving direction of the vehicle. In any of these cases, the computational effort for determining motion vectors can be reduced significantly.

As an alternative method for determining motion vectors, any conventional nonlinear optimization algorithm may be employed such as gradient based methods. According to this method, the optimum translation is found by computing the gradient of the sum of absolute pixel differences between the translated block of a previous video image and the current video image and by iteratively adjusting the translation based on the computed gradient until the sum of absolute pixel differences reaches a minimum.

In any iterative method, the accuracy of the final result as well as the speed of convergence may depend critically on the starting value. In the case of determining motion vectors, a conventional method may either employ zero translation or the motion vector that has been determined for the preceding pair of video images as a starting value. In accordance with an embodiment of the present invention, however, an improved starting value for iteratively determining the motion vector may be defined based on the sensor data 280. More specifically, an estimate of the apparent motion based on the optical flow field computed in accordance with the sensor information 280 may be employed as an improved starting value. In this manner, the number of iterations required for finding the actual motion vectors can be further reduced.

Alternatively, instead of determining the actual motion vector by means of a conventional method from a certain starting vector, a previously determined motion vector may be corrected in accordance with the sensor information. For instance, if the sensor information indicates linear and/or radial acceleration, the change of previously determined motion vectors can be predicted. In this manner, the number of iterations required for finding the actual motion vectors can be further reduced if, for instance, predicted motion vectors are used as starting value for the conventional method.

In some cases, even no conventional iteration or search may be necessary at all, if predicted motion vectors are used directly instead of the result of an iteration or search algorithm. More specifically, the model unit 270 may calibrate its model, i.e., the motion vectors, by applying a conventional method based on video data 210 only once every predetermined number of video images while updating its model for the other video images based on the sensor data 280 only. In this manner, the computational cost of determining motion vectors may be reduced even further.

For instance, if acceleration sensors indicate no change to the vehicle's state of motion, the very same set of motion vectors may be used to predict the next video image. On the other hand, changes to the vehicle's state of motion reported by certain sensors may the employed to update the current set of motion vectors before predicting the next video images. Linear acceleration or deceleration, for instance, simply translates to a scale factor for the motion vectors.

Even if the vehicle's state of motion and changes thereof are not completely known in terms of vector-valued parameters of velocity and acceleration, the available information may nevertheless be used to update motion vectors in order to obtain improved starting points for a conventional iteration or search of the actual motion vectors. For instance, if only linear accelerations can be measured, motion vectors can be scaled accordingly and refined by a conventional iteration starting with the scaled motion vectors. In this manner, the actual motion vectors required for predicting the next video image can be determined more precisely and more efficiently.

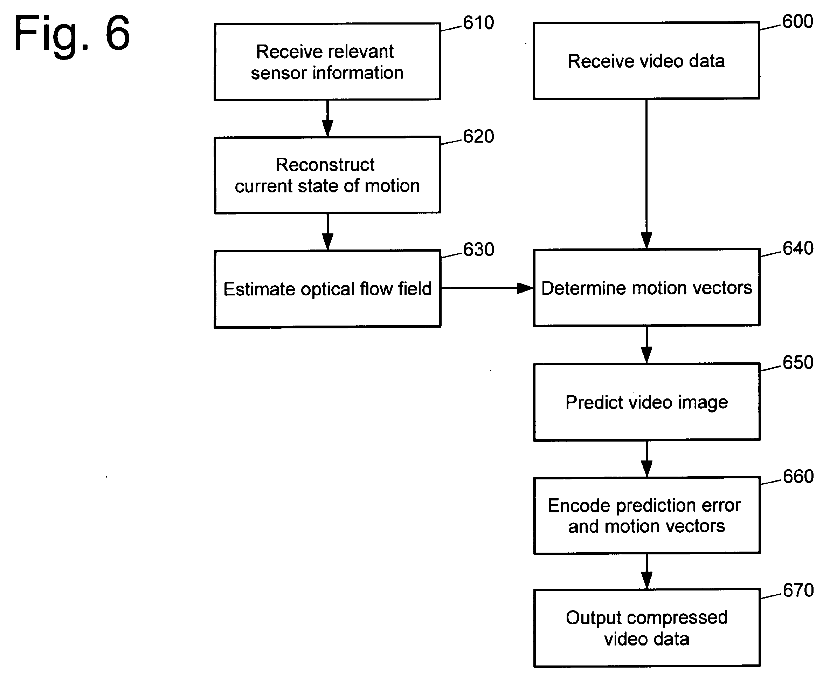

Figure 6 is a flow chart illustrating a method for sensor assisted video compression in accordance with an embodiment of the present invention. The method receives input video data and sensor information in two independent steps 600 and 610. The sensor information is employed in step 620 to reconstruct the vehicle's current state of motion. Based on the information on the vehicle's proper motion and on known camera parameters, including viewing direction, focal length, and frame rate, the optical flow field can be estimated which indicates the apparent motion of objects within the camera's visual field. This estimate may either be quantitative in terms of a vector field representation or qualitative providing, for instance, information on the type of the vector field.

The estimated optical flow field is then employed in step 640 to efficiently determine motion vectors required for motion compensation. To this end, the estimated optical flow field may either be used as a starting point for iteratively determining the motion vectors, to define a restricted search range, or to update previously determined motion vectors as described above. Based on the thus determined motion vectors, a current video image may be predicted in step 650. In step 660, the prediction error and the motion vectors are encoded so as to finally output compressed video data in step 670.

The present invention has been described mostly in connection with video compression based on motion estimation and compensation. However, the present invention may also be applied to other model-based video encoders. For instance, in video encoders with a model unit 270 for recognizing and tracking objects such as vehicles, road markings, traffic signs, etc., the very same principles may be applied as described above. Specifically, object motion information may be determined and updated in accordance with sensor data as described above in the context of motion vectors. In this manner, the computational cost for recognizing objects and their state of motion in each video image may be significantly reduced.

Summarizing, the present invention relates to an apparatus and a corresponding method for video compression in a vehicle. Vehicle motion information provided by various sensors is employed to reconstruct the vehicle's current state of motion and to estimate the optical flow within the camera's visual field. The estimated optical flow is used to improve coding efficiency of the video encoder. Particularly in motion compensation based coding, motion vectors describing apparent motion of objects within the video images can be determined more efficiently by taking the estimated optical flow int account.

## Claims

1. A digital video system for vehicles, in particular automotive vehicles, said video system comprising:
a video camera (120) mounted to the vehicle;
at least one sensor (130-132) that is providing vehicle motion information indicating a current state of motion of the vehicle;
an optical flow estimation unit (285) for estimating motion of objects within the visual field of the video camera (120) in accordance with the vehicle motion information; and
a video encoder (110) that is adapted for compressing video data delivered by the video camera (120) in accordance with the estimated motion of objects within the visual field of the video camera (120),
**characterized in that** the video encoder (110) comprises:
a motion estimation unit (270) that is adapted for determining motion vectors indicating motion within subsequent video images, said motion vectors being determined on the basis of the video data only once every predetermined number of video images, and for updating said motion vectors for the other video images only on the basis of the estimated motion of objects within the visual field of the video camera (120); and
a predictive coding unit that is adapted for coding a difference between the video data and video images that are predicted from the determined motion vectors.

2. A digital video system according to claim 1, wherein the optical flow estimation unit (285) further comprises a motion reconstruction means for reconstructing the vehicle's current state of motion from vehicle motion information provided by the at least one sensor (130-132) and wherein the motion of objects within the visual field of the video camera (120) is determined in accordance with the reconstructed current state of motion of the vehicle.

3. A digital video system according to claim 1 or 2, wherein the optical flow estimation unit (285) is providing information on the estimated motion of objects within the visual field of the video camera (120) in form of qualitative information indicating a type of flow field.

4. A digital video system according to claim 1 or 2, wherein the optical flow estimation unit (285) is providing information on the estimated motion of objects within the visual field of the video camera (120) in form of a vector field representation.

5. A digital video system according to claim 1, wherein the motion estimation unit (270) is determining the motion vectors by searching a predefined search range of possible motion vectors.

6. A digital video system according to claim 5, wherein the motion estimation unit (270) is setting the search range in accordance with the estimated motion of objects within the visual field of the video camera (120).

7. A digital video system according to any of claims 1 to 6, wherein the motion estimation unit (270) is setting starting values for searching the motion vectors in accordance with the estimated motion of objects within the visual field of the video camera (120).

8. A digital video system according to any of claims 1 to 7, wherein the video encoder (110) further comprises a blocking device that is partitioning a video image into blocks, and wherein the motion estimation unit (270) is determining motion vectors for each of said blocks in accordance with the estimated motion of objects within the visual field of the video camera (120) and a location of the block within the video image.

9. A digital video system according to any of claims 1 to 8, wherein the video encoder (110) is compressing the video data in accordance with any of the MPEG standards.

10. A digital video system according to any of claims 1 to 9, wherein the at least one sensor (130-132) is either one of a tachometer, an accelerometer, an angular sensor of the steering wheel, a distance sensor, a gyroscope, a compass, and a GPS receiver.

11. A digital video system according to any of claims 1 to 10, wherein the vehicle motion information comprises at least one of velocity, direction of motion, linear acceleration, and radial acceleration.

12. A digital video system according to any of claims 1 to 11, further comprising a digital communications bus line for connecting the at least one sensor (130-132) and the video encoder (110).

13. A digital video system according to claim 12 further comprising a gateway for connecting the at least one sensor (130-132) and the video encoder (110).

14. A digital video system according to claim 12 or 13, further comprising a video decoder and a displaying device connected to the video encoder (110) via the digital communications bus line for decoding and displaying the compressed video data.

15. A digital video system according to any of claims 12 to 14, further comprising a recording device connected to the video encoder (110) via the digital communications bus line for recording the compressed video data.

16. A video compression method for vehicles, in particular automotive vehicles, equipped with a video camera (120) mounted to the vehicle and at least one sensor (130-132) that is providing vehicle motion information indicating a current state of motion of the vehicle, said method comprising the steps of
estimating (630) a motion of objects within the visual field of the video camera (120) in accordance with the vehicle motion information; and
compressing (640, 650, 660) video data delivered by the video camera (120) in accordance with the estimated motion of objects within the visual field of the video camera (120),
**characterized in that** the compressing step (640, 650, 660) further comprises the steps of
determining motion vectors (640) indicating motion within subsequent video images, said motion vectors being determined on the basis of the video data only once every predetermined number of video images;
updating said motion vectors for the other video images only on the basis of the estimated motion of objects within the visual field of the camera; and
coding (650, 660) a difference between the video data and video images that are predicted from the determined motion vectors .

17. A video compression method according to claim 16, further comprising the step of reconstructing (620) the vehicle's current state of motion from vehicle motion information provided by the at least one sensor (130-132) and wherein the estimating step is performed in accordance with the reconstructed current state of motion of the vehicle.

18. A video compression method according to claim 16 or 17, wherein the estimating step (630) is providing information on the estimated motion of objects within the visual field of the video camera (120) in form of qualitative information indicating a type of flow field.

19. A video compression method according to claim 16 or 17, wherein the estimating step (630) is providing information on the estimated motion of objects within the visual field of the video camera (120) in form of a vector field representation.

20. A video compression method according to claim 16, wherein the determining step (640) is determining the motion vectors by searching a predefined search range of possible motion vectors.

21. A video compression method according to claim 20, wherein the determining step (640) is setting the search range in accordance with the estimated motion of objects within the visual field of the video camera (120).

22. A video compression method according to any of claims 16 to 21, wherein the determining step (640) is setting starting values for searching the motion vectors in accordance with the estimated motion of objects within the visual field of the video camera (120).

23. A video compression method according to any of claims 16 to 22, wherein the compressing step (640, 650, 660) further comprises the steps of partitioning a video image into blocks, and wherein the determining step (640) is determining motion vectors for each of said blocks in accordance with the estimated motion of objects within the visual field of the video camera (120) and a location of the block within the video image.

24. A video compression method according to any of claims 16 to 23, wherein the compressing step (640, 650, 660) is compressing the video data in accordance with any of the MPEG standards.

25. A video compression method according to any of claims 16 to 24, wherein the vehicle motion information comprises at least one of velocity, direction of motion, linear acceleration, and radial acceleration.

## Patentansprüche

1. Digitales Videosystem für Fahrzeuge, insbesondere Automobile, das Videosystem umfassend
eine Videokamera (120), die an dem Fahrzeug montiert ist;
wenigstens einen Sensor (130-132), der Fahrzeugbewegungsinformationen bereitstellt, die einen aktuellen Zustand der Bewegung des Fahrzeugs angeben;
eine Einheit (285) zur Schätzung des optischen Flusses, um die Bewegung von Objekten im Sichtfeld der Videokamera (120) gemäß den Fahrzeugbewegungsinformationen zu schätzen; und
einen Video-Encoder (110), der angepasst ist, um Videodaten zu komprimieren, die durch die Videokamera (120) gemäß der geschätzten Bewegung von Objekten im Sichtfeld der Videokamera (120) übermittelt werden,
**dadurch gekennzeichnet, dass** der Video-Encoder (110) Folgendes umfasst:
eine Bewegungsschätzeinheit (270), die angepasst ist, um Bewegungsvektoren zu bestimmen, die Bewegung in aufeinander folgenden Videobildern angeben, wobei die Bewegungsvektoren auf Grundlage der Videodaten nur einmal pro vorgegebene Anzahl an Videobildern bestimmt werden, und um die Bewegungsvektoren für die anderen Videobilder nur auf Grundlage der geschätzten Bewegung von Objekten im Sichtfeld der Videokamera (120) zu aktualisieren; und
eine Prädiktionscodierungseinheit, die angepasst ist, um eine Differenz zwischen den Videodaten und Videobildern zu codieren, die aus den bestimmten Bewegungsvektoren prognostiziert werden.

2. Digitales Videosystem nach Anspruch 1, wobei die Einheit (285) zur Schätzung des optischen Flusses ferner ein Bewegungsrekonstruktionsmittel zum Rekonstruieren des aktuellen Bewegungszustands des Fahrzeugs aus Fahrzeugbewegungsinformationen, die durch den wenigstens einen Sensor (130-132) bereitgestellt werden, umfasst und wobei die Bewegung von Objekten im Sichtfeld der Videokamera (120) gemäß dem rekonstruierten aktuellen Bewegungszustand des Fahrzeugs bestimmt wird.

3. Digitales Videosystem nach Anspruch 1 oder 2, wobei die Einheit (285) zur Schätzung des optischen Flusses Informationen über die geschätzte Bewegung von Objekten im Sichtfeld der Videokamera (120) in Form von qualitativen Informationen bereitstellt, die einen Flussfeldtyp angeben.

4. Digitales Videosystem nach Anspruch 1 oder 2, wobei die Einheit (285) zur Schätzung des optischen Flusses Informationen über die geschätzte Bewegung von Objekten im Sichtfeld der Videokamera (120) in Form einer Vektorfelddarstellung bereitstellt.

5. Digitales Videosystem nach Anspruch 1, wobei die Bewegungsschätzeinheit (270) die Bewegungsvektoren durch Durchsuchen eines vordefinierten Suchbereichs möglicher Bewegungsvektoren bestimmt.

6. Digitales Videosystem nach Anspruch 5, wobei die Bewegungsschätzeinheit (270) den Suchbereich gemäß der geschätzten Bewegung von Objekten im Sichtfeld der Videokamera (120) festlegt.

7. Digitales Videosystem nach einem der Ansprüche 1 bis 6, wobei die Bewegungsschätzeinheit (270) Anfangswerte zum Suchen der Bewegungsvektoren gemäß der geschätzten Bewegung von Objekten im Sichtfeld der Videokamera (120) festlegt.

8. Digitales Videosystem nach einem der Ansprüche 1 bis 7, wobei der Video-Encoder (110) ferner eine Blockbildungsvorrichtung umfasst, die ein Videobild in Blöcke aufteilt und wobei die Bewegungsschätzeinheit (270) Bewegungsvektoren für jeden der Blöcke gemäß der geschätzten Bewegung von Objekten im Sichtfeld der Videokamera (120) und einer Position des Blocks im Videobild bestimmt.

9. Digitales Videosystem nach einem der Ansprüche 1 bis 8, wobei der Video-Encoder (110) die Videodaten gemäß einem beliebigen der MPEG-Standards komprimiert.

10. Digitales Videosystem nach einem der Ansprüche 1 bis 9, wobei der wenigstens eine Sensor (130-132) eins ist von einem Drehzahlmesser, einem Beschleunigungsmesser, einem Winkelsensor des Lenkrads, einem Entfernungssensor, einem Gyroskop, einem Kompass und einem GPS-Empfänger.

11. Digitales Videosystem nach einem der Ansprüche 1 bis 10, wobei die Fahrzeugbewegungsinformationen wenigstens eins umfassen von Geschwindigkeit, Bewegungsrichtung, linearer Beschleunigung und radialer Beschleunigung.

12. Digitales Videosystem nach einem der Ansprüche 1 bis 11, ferner umfassend eine digitale Kommunikationsbusleitung, um den wenigstens einen Sensor (130-132) und den Video-Encoder (110) zu verbinden.

13. Digitales Videosystem nach Anspruch 12, ferner umfassend ein Gateway, um den wenigstens einen Sensor (130-132) und den Video-Encoder (110) zu verbinden.

14. Digitales Videosystem nach Anspruch 12 oder 13, ferner umfassend einen Video-Decoder und eine Anzeigevorrichtung, die über die digitale Kommunikationsbusleitung mit dem Video-Encoder (110) verbunden sind, um die komprimierten Videodaten zu decodieren und anzuzeigen.

15. Digitales Videosystem nach einem der Ansprüche 12 bis 14, ferner umfassend eine Aufzeichnungsvorrichtung, die über die digitale Kommunikationsbusleitung mit dem Video-Encoder (110) verbunden ist, um die komprimierten Videodaten aufzuzeichnen.

16. Videokompressionsverfahren für Fahrzeuge, insbesondere Automobile, die mit einer Videokamera (120), die an dem Fahrzeug montiert ist, und wenigstens einem Sensor (130-132), der Fahrzeugbewegungsinformationen bereitstellt, die einen aktuellen Bewegungszustand des Fahrzeugs angeben, ausgestattet sind, wobei das Verfahren folgende Schritte umfasst
Schätzen (630) einer Bewegung von Objekten im Sichtfeld der Videokamera (120) gemäß den Fahrzeugbewegungsinformationen; und
Komprimieren (640, 650, 660) von Videodaten, die durch die Videokamera (120) übermittelt werden, gemäß der geschätzten Bewegung von Objekten im Sichtfeld der Videokamera (120),
**dadurch gekennzeichnet, dass** der Kompressionsschritt (640, 650, 660) ferner folgende Schritte umfasst
Bestimmen von Bewegungsvektoren (640), die Bewegung in aufeinander folgenden Videobildern angeben, wobei die Bewegungsvektoren auf Grundlage der Videodaten nur einmal pro vorgegebene Anzahl an Videobildern bestimmt werden;
Aktualisieren der Bewegungsvektoren für die anderen Videobilder nur auf der Grundlage der geschätzten Bewegung von Objekten im Sichtfeld der Kamera; und
Codieren (650, 660) einer Differenz zwischen den Videodaten und Videobildern, die aus den bestimmten Bewegungsvektoren prognostiziert werden.

17. Videokompressionsverfahren nach Anspruch 16, ferner umfassend den Schritt des Rekonstruierens (620) des aktuellen Bewegungszustands des Fahrzeugs aus Fahrzeugbewegungsinformationen, die durch den wenigstens einen Sensor (130-132) bereitgestellt werden, und wobei der Schätzschritt gemäß dem rekonstruierten aktuellen Bewegungszustand des Fahrzeugs durchgeführt wird.

18. Videokompressionsverfahren nach Anspruch 16 oder 17, wobei der Schätzschritt (630) Informationen über die geschätzte Bewegung von Objekten im Sichtfeld der Videokamera (120) in Form qualitativer Informationen, die einen Flussfeldtyp angeben, bereitstellt.

19. Videokompressionsverfahren nach Anspruch 16 oder 17, wobei der Schätzschritt (630) Informationen über die geschätzte Bewegung von Objekten im Sichtfeld der Videokamera (120) in Form einer Vektorfelddarstellung bereitstellt.

20. Videokompressionsverfahren nach Anspruch 16, wobei es sich beim Bestimmungsschritt (640) um das Bestimmen der Bewegungsvektoren durch Durchsuchen eines vordefinierten Suchbereichs möglicher Bewegungsvektoren handelt.

21. Videokompressionsverfahren nach Anspruch 20, wobei es sich beim Bestimmungsschritt (640) um das Festlegen des Suchbereichs gemäß der geschätzten Bewegung von Objekten im Sichtfeld der Videokamera (120) handelt.

22. Videokompressionsverfahren nach einem der Ansprüche 16 bis 21, wobei es sich beim Bestimmungsschritt (640) um das Festlegen von Ausgangswerten für das Durchsuchen der Bewegungsvektoren gemäß der geschätzten Bewegung von Objekten im Sichtfeld der Videokamera (120) handelt.

23. Videokompressionsverfahren nach einem der Ansprüche 16 bis 22, wobei der Kompressionsschritt (640, 650, 660) ferner die Schritte des Aufteilens eines Videobilds in Blöcke umfasst, und wobei es sich beim Bestimmungsschritt (640) um das Bestimmen von Bewegungsvektoren für jeden der Blöcke gemäß der geschätzten Bewegung von Objekten im Sichtfeld der Videokamera (120) und einer Position des Blocks im Videobild handelt.

24. Videokompressionsverfahren nach einem der Ansprüche 16 bis 23, wobei es sich beim Kompressionsschritt (640, 650, 660) um das Komprimieren der Videodaten gemäß einem beliebigen der MPEG-Standards handelt.

25. Videokompressionsverfahren nach einem der Ansprüche 16 bis 24, wobei die Fahrzeugbewegungsinformationen wenigstens eins umfassen von Geschwindigkeit, Bewegungsrichtung, linearer Beschleunigung und radialer Beschleunigung.

## Revendications

1. Système vidéo numérique pour véhicules, en particulier des véhicules automobiles, ledit système vidéo comprenant :
une caméra vidéo (120) montée sur le véhicule ;
au moins un capteur (130-132) qui fournit des informations de mouvement du véhicule indiquant un état de mouvement actuel du véhicule ;
une unité d'estimation de flux optique (285) pour estimer un mouvement d'objets situés dans le champ visuel de la caméra vidéo (120) en fonction des informations de mouvement du véhicule ; et
un encodeur vidéo (110) qui est conçu pour compresser des données vidéo délivrées par la caméra vidéo (120) en fonction du mouvement estimé d'objets situés dans le champ visuel de la caméra vidéo (120),
**caractérisé en ce que** l'encodeur vidéo (110) comprend :
une unité d'estimation de mouvement (270) qui est conçue pour déterminer des vecteurs de mouvement indiquant un mouvement dans des images vidéo successives, lesdits vecteurs de mouvement étant déterminés sur la base des données vidéo une seule fois par nombre prédéterminé d'images vidéo, et pour actualiser lesdits vecteurs de mouvement pour les autres images vidéo uniquement sur la base du mouvement estimé des objets situés dans le champ visuel de la caméra vidéo (120) ; et
une unité de codage prédictif qui est adaptée pour coder une différence entre les données vidéo et les images vidéo qui sont prédites à partir des vecteurs de mouvement déterminés.

2. Système vidéo numérique selon la revendication 1, dans lequel l'unité d'estimation de flux optique (285) comprend en outre un moyen de reconstitution de mouvement pour reconstituer l'état de mouvement actuel du véhicule à partir d'informations de mouvements du véhicule fournies par l'au moins un capteur (130-132) et dans lequel le mouvement d'objets situés dans le champ visuel de la caméra vidéo (120) est déterminé en fonction de l'état de mouvement actuel du véhicule qui a été reconstitué.

3. Système vidéo numérique selon la revendication 1 ou 2, dans lequel l'unité d'estimation de flux optique (285) fournit des informations sur le mouvement estimé d'objets situés dans le champ visuel de la caméra vidéo (120) sous la forme d'informations qualitatives indiquant un type de champ de flux.

4. Système vidéo numérique selon la revendication 1 ou 2, dans lequel l'unité d'estimation de flux optique (285) fournit des informations sur le mouvement estimé d'objets situés dans le champ visuel de la caméra vidéo (120) sous la forme d'une représentation de champs vectoriels.

5. Système vidéo numérique selon la revendication 1, dans lequel l'unité d'estimation de mouvement (270) détermine les vecteurs de mouvement en examinant une plage de recherche prédéfinie de vecteurs de mouvement possibles.

6. Système vidéo numérique selon la revendication 5, dans lequel l'unité d'estimation de mouvement (270) définit la plage de recherche en fonction du mouvement estimé d'objets situés dans le champ visuel de la caméra vidéo (120).

7. Système vidéo numérique selon l'une quelconque des revendications 1 à 6, dans lequel l'unité d'estimation de mouvement (270) définit des valeurs de départ pour rechercher les vecteurs de mouvement en fonction du mouvement estimé d'objets situés dans le champ visuel de la caméra vidéo (120).

8. Système vidéo numérique selon l'une quelconque des revendications 1 à 7, dans lequel l'encodeur vidéo (110) comprend en outre un dispositif de subdivision en blocs qui subdivise une image vidéo en blocs, et dans lequel l'unité d'estimation de mouvement (270) détermine des vecteurs de mouvement pour chacun desdits blocs en fonction du mouvement estimé d'objets situés dans le champ visuel de la caméra vidéo (120) et d'une position du bloc dans l'image vidéo.

9. Système vidéo numérique selon l'une quelconque des revendications 1 à 8, dans lequel l'encodeur vidéo (110) compresse les données vidéo selon l'une quelconque des normes de compression MPEG.

10. Système vidéo numérique selon l'une quelconque des revendications 1 à 9, dans lequel l'au moins un capteur (130-132) est soit un tachymètre, un accéléromètre, un capteur angulaire du volant de direction, un capteur de distance, un gyroscope, une boussole ou un récepteur GPS.

11. Système vidéo numérique selon l'une quelconque des revendications 1 à 10, dans lequel les informations de mouvement du véhicule comprennent au moins un paramètre parmi la vitesse, la direction du mouvement, l'accélération linéaire et l'accélération radiale.

12. Système vidéo numérique selon l'une quelconque des revendications 1 à 11, comprenant en outre une ligne de bus de communication numérique pour connecter l'au moins un capteur (130-132) et l'encodeur vidéo (110).

13. Système vidéo numérique selon la revendication 12, comprenant en outre une passerelle pour connecter l'au moins un capteur (130-132) et l'encodeur vidéo (110).

14. Système vidéo numérique selon la revendication 12 ou 13, comprenant en outre un décodeur vidéo et un dispositif d'affichage connectés à l'encodeur vidéo (110) via la ligne de bus de communication numérique pour décoder et afficher les données vidéo compressées.

15. Système vidéo numérique selon l'une quelconque des revendications 12 à 14, comprenant en outre un dispositif d'enregistrement connecté à l'encodeur vidéo (110) via la ligne de bus de communication numérique pour enregistrer les données vidéo compressées.

16. Procédé de compression vidéo pour véhicules, en particulier des véhicules automobiles, équipés d'une caméra vidéo (120) montée sur le véhicule et d'au moins un capteur (130-132) qui fournit des informations de mouvement du véhicule indiquant un état de mouvement actuel du véhicule, ledit procédé comprenant les étapes consistant à
estimer (630) un mouvement d'objets situés dans le champ visuel de la caméra vidéo (120) en fonction des informations de mouvement du véhicule ; et
compresser (640, 650, 660) des données vidéo délivrées par la caméra vidéo (120) en fonction du mouvement estimé d'objets situés dans le champ visuel de la caméra vidéo (120),
**caractérisé en ce que** l'étape de compression (640, 650, 660) comprend en outre les étapes consistant à
déterminer des vecteurs de mouvement (640) indiquant un mouvement dans des images vidéo successives, lesdits vecteurs de mouvement étant déterminés sur la base des données vidéo une seule fois par nombre prédéterminé d'images vidéo ;
actualiser lesdits vecteurs de mouvement pour les autres images vidéo uniquement sur la base du mouvement estimé des objets situés dans le champ visuel de la caméra vidéo ; et
coder (650, 660) une différence entre les données vidéo et les images vidéo qui sont prédites à partir des vecteurs de mouvement déterminés.

17. Procédé de compression vidéo selon la revendication 16, comprenant en outre l'étape consistant à reconstituer (620) l'état de mouvement actuel du véhicule à partir d'informations de mouvement du véhicule fournies par l'au moins un capteur (130-132) et dans lequel l'étape d'estimation est exécutée en fonction de l'état de mouvement actuel du véhicule qui a été reconstitué.

18. Procédé de compression vidéo selon la revendication 16 ou 17, dans lequel l'étape d'estimation (630) fournit des informations sur le mouvement estimé d'objets situés dans le champ visuel de la caméra vidéo (120) sous la forme d'informations qualitatives indiquant un type de champ de flux.

19. Procédé de compression vidéo selon la revendication 16 ou 17, dans lequel l'étape d'estimation (630) fournit des informations sur le mouvement estimé d'objets situés dans le champ visuel de la caméra vidéo (120) sous la forme d'une représentation de champs vectoriels.

20. Procédé de compression vidéo selon la revendication 16, dans lequel l'étape de détermination (640) détermine les vecteurs de mouvement en examinant une plage de recherche prédéfinie de vecteurs de mouvement possibles.

21. Procédé de compression vidéo selon la revendication 20, dans lequel l'étape de détermination (640) définit la plage de recherche en fonction du mouvement estimé d'objets situés dans le champ visuel de la caméra vidéo (120).

22. Procédé de compression vidéo selon l'une quelconque des revendications 16 à 21, dans lequel l'étape de détermination (640) définit des valeurs de départ pour rechercher les vecteurs de mouvement en fonction du mouvement estimé d'objets situés dans le champ visuel de la caméra vidéo (120).

23. Procédé de compression vidéo selon l'une quelconque des revendications 16 à 22, dans lequel l'étape de compression (640, 650, 660) comprend en outre l'étape consistant à subdiviser une image vidéo en plusieurs blocs, et dans lequel l'étape de détermination (640) détermine des vecteurs de mouvement pour chacun desdits blocs en fonction du mouvement estimé d'objets situés dans le champ visuel de la caméra vidéo (120) et d'une position du bloc dans l'image vidéo.

24. Procédé de compression vidéo selon l'une quelconque des revendications 16 à 23, dans lequel l'étape de compression (640, 650, 660) compresse les données vidéo selon l'une quelconque des normes de compression MPEG.

25. Procédé de compression vidéo selon l'une quelconque des revendications 16 à 24, dans lequel les informations de mouvement du véhicule comprennent au moins un paramètre parmi la vitesse, la direction du mouvement, l'accélération linéaire et l'accélération radiale.
